# Europäisches Patentamt
# European Patent Office
# Office européen des brevets

(19)

(11) Veröffentlichungsnummer: **0 008 128**
**B1**

(12)

# EUROPÄISCHE PATENTSCHRIFT

(45) Veröffentlichungstag der Patentschrift:
**12.10.83**

(51) Int. Cl.³: **B 60 J 5/06, E 05 D 15/10**

(21) Anmeldenummer: **79102940.8**

(22) Anmeldetag: **13.08.79**

(54) Schwenkschiebetür, insbesondere für Fahrzeuge.

(30) Priorität: **14.08.78 AT 5893/78**

(43) Veröffentlichungstag der Anmeldung:
**20.02.80 Patentblatt 80/4**

(45) Bekanntmachung des Hinweises auf die Patenterteilung:
**12.10.83 Patentblatt 83/41**

(84) Benannte Vertragsstaaten:
**CH DE FR IT NL SE**

(56) Entgegenhaltungen:
**DE-A-2 023 826**
**DE-A-2 220 701**
**DE-A-2 412 936**
**FR-A-1 514 875**
**US-A-3 886 685**

(73) Patentinhaber: **Vereinigte Metallwerke Ranshofen-Berndorf AG, A-5282 Braunau am Inn (AT)**

(72) Erfinder: **Gemeinböck, Gerhard, Anton-Sattlerg. 115/17/7/23, A-1220 Wien (AT)**
Erfinder: **Hajek, Robert, Jedlersdorferstrasse 99/Stg.30/78, A-1210 Wien (AT)**

(74) Vertreter: **Hain, Leonhard, Dipl.-Ing., Tal 18/IV, D-8000 München 2 (DE)**

Schwenkschiebetür, insbesondere für Fahrzeuge

Die Erfindung betrifft eine Schwenkschiebetür, insbesondere für Fahrzeuge, mit einem im Bereich der Türoberkante angeordneten, auf zwei in einem Winkel geneigt zur Fahrzeugwand verlaufenden, parallelen Führungsstangen geführten Laufwagen und einem am Türblatt befestigten Tragarm, der am Laufwagen um eine zur Türblattseitenkante parallele Drehachse gelagert ist, so dass die Schwenkschiebetür bei der Öffnungs- und Schliessbewegung quer zur Schieberichtung verschwenkt wird.

Bei einer bekannten Schwenkschiebetür dieser Art (DE-A-2412936) werden allein zur Erfüllung der Tragfunktion drei Rollen am Führungswagen benötigt und die Steuerung wird durch einen Federklinkenmechanismus am Ende der Schiebebewegung ausgeführt. Die Trag- oder Führungsschienen befinden sich dabei zum Teil ausserhalb der Fahrzeugwand. Dadurch wird der Lichteinfall beträchtlich verringert und auch die Verschmutzungsgefahr erhöht. Die Führungsrollen und -Schienen machen diese Konstruktion ausserdem aufwendig und kompliziert. Bei einer anderen bekannten Schiebetür (FR-A-1514875) sind zwei auf Rollen laufende Tragarme um eine vertikale Achse schwenkbar, wobei deren Bewegung wiederum durch Führungsrollen gesteuert wird, die in eine Führungsschiene eingreifen. Die Laufwagen sind ebenfalls auf Rollen aufgehängt, die in Führungsschienen laufen. Somit sind je Türblatt zwei Laufwagen mit den zugehörigen Rollen erforderlich.

Daher liegt der Erfindung die Aufgabe zugrunde, eine Schwenkschiebetür zu schaffen, die zur Aufnahme der in verschiedenen Richtungen wirkenden Kräfte eine einfachere und zuverlässigere Konstruktion vorsieht, die überdies ausserhalb der Fahrzeugwand befindliche Teile vermeidet.

Zur Lösung dieser Aufgabe ist eine Schwenkschiebetür der eingangs genannten Art gemäss der Erfindung, dadurch gekennzeichnet, dass der Laufwagen die Führungsstangen vollständig umschliessende Führungen aufweist und dass zur Steuerung der Bewegung des Tragarmes bzw. des damit verbundenen Türblattes an einem sich über die Drehachse des Tragarmes erstreckenden Ende eine Führungsrolle, die in eine kurvenförmig ausgebildete Führungsschiene eingreift, vorgesehen ist.

Diese kompakte Trag- und Führungsvorrichtung lässt sich oberhalb der Tür in einem Dachkasten gut unterbringen, weshalb sie einer Verschmutzung und Vereisung entzogen ist. Die Führungs- und Tragkonstruktion beschränkt sich auf wenige Teile und die Steuerung der Türbewegungen ist auf besonders einfache und zuverlässige Weise gewährleistet. Durch die Verteilung der angreifenden Kräfte auf verhältnismässig grosse Führungsflächen werden auch die Abnützungserscheinungen wesentlich verringert.

Die nach einem weiteren Kennzeichen der Erfindung im unteren Bereich des Türblattes angeordnete zusätzliche Führungseinheit hat keine Tragfunktion mehr zu erfüllen und kann so angeordnet werden, dass sie zur Gänze im Trittbrettkasten geschützt liegt und daher nicht verschmutzen oder vereisen kann.

Der Gegenstand der Erfindung ist in der Zeichnung beispielsweise dargestellt. Es zeigen:

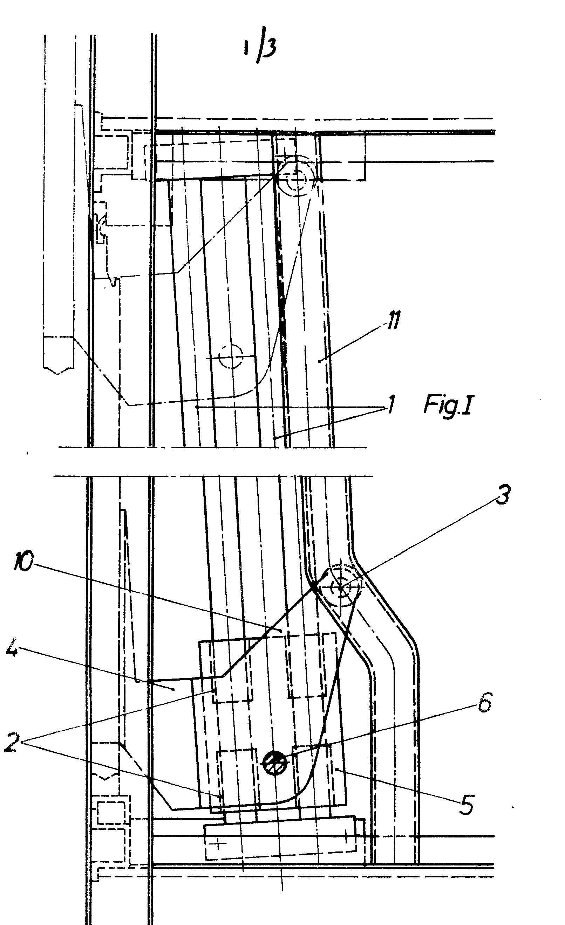

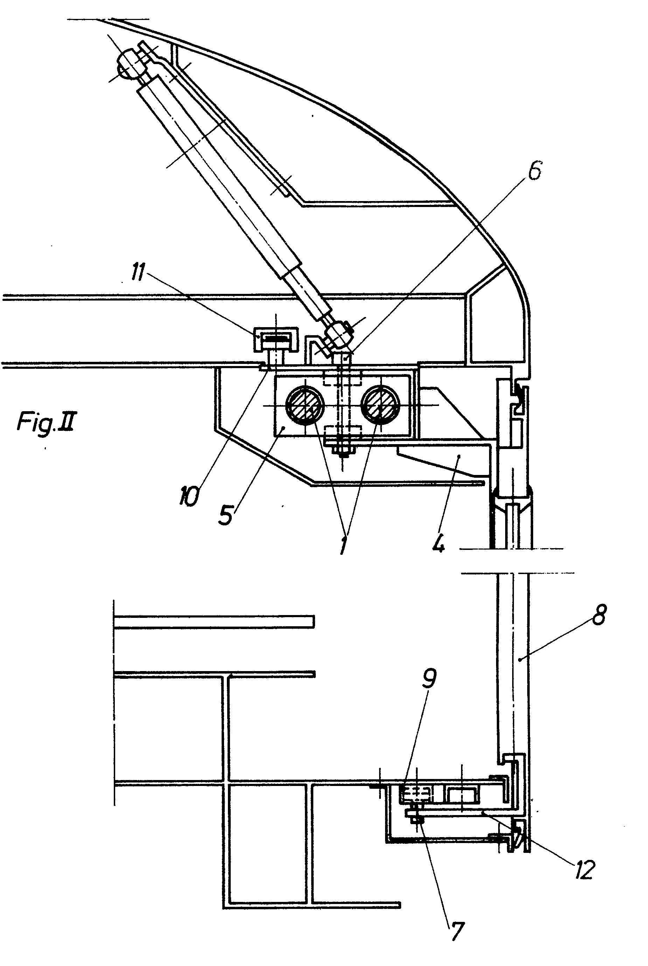

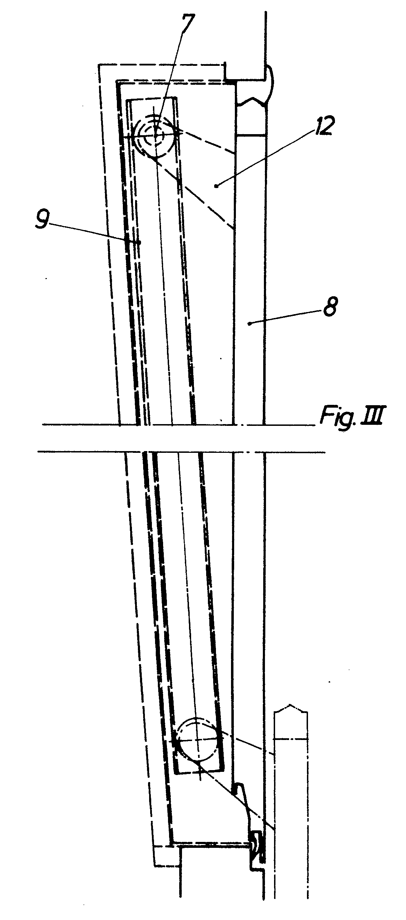

Fig. 1 einen kompakten Führungs- und Steuermechanismus oberhalb der Tür in Draufsicht;

Fig. 2 einen Schnitt durch eine Waggonwand mit Türblatt, und

Fig. 3 einen unteren Führungsmechanismus im Grundriss.

Wie man aus der Zeichnung erkennen kann, ist ein Türblatt 8 über einen Hebelarm 4 an einer Drehachse 6 befestigt, welche in einem Laufwagen 5 gelagert ist. Der Laufwagen 5 ist mit zwei von Gleit- oder Kugelelementen gebildeten Führungen 2 auf zwei parallelen, als Führungsschienen dienenden runden Führungsstangen 1 gelagert, wobei diese Führungsstangen 1 in einem bestimmten Winkel in Abhängigkeit von der Türbreite zur Waggonwand liegen.

Diese Art von parallel angeordneten Führungen bewirkt die notwendige Stabilität, welche Waggon-Einstiegtüren für die Erfüllung ihrer Bewegungsgeometrie benötigen. Eine vorteilhafte technische Kombination ist eine mit der Aufhängevorrichtung gekoppelte Führungs- und Anlenkungseinheit aus Tragarm 4 und Führungsrolle 3. Dabei führt die im Laufwagen 5 gelagerte Drehachse 6, welche mit einem Hebelarm 10 verbunden ist, die Steuerfunktion der oberen Führung des Türblattes aus, indem am Ende des Hebels 10 die Führungsrolle 3 gelagert ist, die in einer U-förmigen, kurvenförmigen Führungsschiene 11 läuft und beim Verschieben ein Ausschwenken des Türblattes aus der Fahrzeugwandebene bewirkt. Obwohl durch diese Anordnung allein die Aufhängung und Bewegungssteuerung des Türblattes 8 durchgeführt werden kann, ist zur weiteren Sicherung noch im Bereich der Unterkante des Türblattes ein Hebelarm 12 angeordnet, der an seinem Ende eine Führungsrolle 7 trägt, welche in einer U-förmigen Führungsschiene 9 läuft. Diese Führungsschiene 9 ist unterhalb des Trittbrettes in einem Trittbrettkasten geschützt gegen Schmutz und Vereisung angeordnet und durch das geschlossene Türblatt nach aussen komplett abgedeckt, so dass beim Fahren und geschlossener Tür keinerlei Schnee eindringen kann. Auch die untere Führungsschiene 9 ist in einem Winkel zur Waggonwand angeordnet. Der nicht dargestellte Antrieb kann pneumatisch oder elektrisch erfolgen und befindet sich in einem Dachkasten oberhalb des Laufwagens 5. Für die weitere Stabilität des Türblattes im geschlossenen Zustand sorgt eine ebenfalls nicht dargestellte elektrisch oder pneumatisch auslösbare Verriegelungseinheit an der Vorderkante des Türblattes 8.

Der Gegenstand der Erfindung ist auf das dargestellte Ausführungsbeispiel nicht beschränkt, da die Führungsschienen auch andere Querschnittsform haben können und die Lagerung mit an sich bekannten Gleitrollen oder Kugelelementen erfolgen kann. Auch die Führungsschienen können diesbezüglich anders ausgebildet sein, wenn statt einer Innen- eine Aussenführung gewünscht wird.

**Patentansprüche**

1. Schwenkschiebetür, insbesondere für Fahrzeuge, mit einem im Bereich der Türoberkante angeordneten, auf zwei in einem Winkel geneigt zur Fahrzeugwand verlaufenden parallelen Führungsstangen (1) geführten Laufwagen (5) und einem am Türblatt (8) befestigten Tragarm (4), der am Laufwagen um eine zur Türblattseitenkante parallele Drehachse (6) gelagert ist, so dass die Schwenkschiebetür bei der Öffnungs- und Schliessbewegung quer zur Schieberichtung verschwenkt wird, dadurch gekennzeichnet, dass der Laufwagen (5) die Führungsstangen (1) vollständig umschliessende Führungen (2) aufweist und dass zur Steuerung der Bewegung des Tragarmes (4) bzw. des damit verbundenen Türblattes (8) an einem sich über die Drehachse (6) des Tragarmes erstreckenden Ende eine Führungsrolle (3), die in eine kurvenförmig ausgebildete Führungsschiene (11) eingreift, vorgesehen ist.

2. Schwenkschiebetür nach Anspruch 1, dadurch gekennzeichnet, dass die Führungsstangen (1) innerhalb der Fahrzeugwand vorgesehen sind und zum Schliessende der Tür hin sich der Fahrzeugwand nähern.

3. Schwenkschiebetür nach Anspruch 1 oder 2, dadurch gekennzeichnet, dass die Führungen (2) mit Gleit- oder Kugelelementen ausgestattet sind.

4. Schwenkschiebetür nach Anspruch 1 bis 3, dadurch gekennzeichnet, dass im Bereich der Unterkante des Türblattes (8) eine weitere, in einer geraden Führungsschiene (9) im Trittbrettkasten geführte Führung (7) vorgesehen ist.

**Claims**

1. Pivotable sliding door, especially for vehicles, comprising a sliding carriage (5) placed in the region of the upper edge of the door and guided on two parallel guide rods (1) inclined in a certain angle towards the wall of the vehicle, and a supporting arm (4) which is fixed to a door leaf (8) and is mounted on the sliding carriage around an axis of rotation (6) which is parallel to the lateral edge of the door leaf, so that the pivotable sliding door swings transversely to the sliding direction during the movements of opening and closing, characterized in that the sliding carriage (5) has guides (2) surrounding the guide rods (1) completely, and that a guide roller (3) engaging in a curved guide rail (11) is provided at an end extending beyond the axis of rotation (6) of the supporting arm for controlling the movement of the supporting arm (4) or of the door leaf (8) connected with it.

2. Pivotable sliding door according to claim 1, characterized in that the guide rods (1) are provided in the interior of the vehicle wall and approach to the vehicle wall in the direction of the closing end of the door.

3. Pivotable sliding door according to claims 1 or 2, characterized in that the guides (2) are equipped with sliding or spherical elements.

4. Pivotable sliding door according to claims 1 to 3, characterized in that another guide (7) guided in a rectilinear guide rail (9) in the footboard case is provided in the region of the lower edge of the door leaf (8).

**Revendications**

1. Porte pivotante et coulissante, en particulier pour voitures, comportant un chariot baladeur (5) disposé à proximité de l'arête supérieure de la porte et guidé sur deux tiges de guidage (1) parallèles et inclinées d'un certain angle par rapport à la paroi de la voiture, ainsi qu'un bras de support (4) qui, fixé au panneau (8) de la porte, est monté, sur le chariot baladeur, autour d'un axe de rotation (6) parallèle ou bord latéral du panneau de porte (8), de telle façon que la porte pivotante et coulissante effectue un pivotement perpendiculaire à la direction du coulissement lors des mouvements d'ouverture et de fermeture, porte caractérisée par le fait que le chariot baladeur (5) présente des guidages (2) qui entourent intégralement les tiges de guidage (1); et par le fait que, en vue de la commande du mouvement du bras de support (4), ou du panneau de porte (8) qui lui est relié, à une extrémité s'étendant au-dessus de l'axe de rotation (6) dudit bras de support, il est prévu un galet de guidage (3) qui vient en prise dans un rail de guidage (11) de forme curviligne.

2. Porte pivotante et coulissante selon la revendication 1, caractérisée par le fait que les tiges de guidage (1) sont prévues à l'intérieur de la paroi de la voiture et s'approchent de cette paroi de voiture en direction de l'extrémité de fermeture de la porte.

3. Porte pivotante et coulissante selon la revendication 1 ou 2, caractérisée par le fait que les guidages (2) sont munis d'organes coulissants ou sphériques.

4. Porte pivotante et coulissante selon les revendications 1 à 3, caractérisée par le fait qu'il est prévu, à proximité du bord inférieur du panneau de porte (8), un autre guidage (7) mobile dans un rail rectiligne de guidage (9) disposé dans le caisson de marchepied.

Fig.I

Fig.II

Fig. III